# EUROPÄISCHE PATENTSCHRIFT

(11) **EP 1 484 246 B1**
(45) Veröffentlichungstag und Bekanntmachung des Hinweises auf die Patenterteilung: **21.10.2009**
(21) Anmeldenummer: 04012549.4
(22) Anmeldetag: 27.05.2004
(51) Int. Cl.: B64D 47/00, G06F 13/10, B64D 11/00

(54) **Luftfahrzeugkabinengerätesteuerung**
Control unit for aircraft cabin equipment
Système de contrôle pour équipements d'une cabine d'aéronef

(30) Priorität: 03.06.2003 DE 10325258
(43) Veröffentlichungstag der Anmeldung: 08.12.2004
(73) Patentinhaber: Diehl Aerospace GmbH, 88662 Überlingen (DE)
(72) Erfinder: Petersen, Benno, 88634 Herdwangen (DE); Walle, Gerardo, Dr., 88662 Überlingen (DE)
(74) Vertreter: Diehl Patentabteilung

(56) Entgegenhaltungen:
- EP-A- 1 372 079
- WO-A-02/076825
- WO-A-03/042797
- WO-A-03/091101
- DE-C1- 19 710 286

## Beschreibung

Die Erfindung betrifft eine Luftfahrzeugkabinengerätesteuerung mit einer Leistungsverteilung, wie sie prinzipiell insbesondere aus der DE 1 96 17 915 C2 bekannt ist. Dort ist eine Zuordnung von Verbrauchern zu bestimmten Zweigen eines Energieversorgungssystemes derart vorgesehen, dass trotz Ausfalles von Energieversorgungszweigen doch ein Betrieb unter Prioritätsgesichtspunkten sichergestellt bleibt. Das soll dadurch erreicht werden, dass unter erschwerten Bedingungen eine Neuzuordnung von Verbrauchern bei Berücksichtigung der Auslastung der einzelnen Zweige und gemäß Prioritätsgesichtspunkten erfolgt. Dafür ist ein Konfigurationsmanagement vorbereitet, das auf abgespeicherten Daten über das Verbraucherverhalten und über das Umfeld der Kabinengeräte im Luftfahrzeug basiert; und eine zentrale Energiesteuerung ist bezüglich der Verbraucher mit einer Prioritätsmatrix und mit einem Auswahlprozessor ausgestattet, um auf Störungen logisch reagieren und so durch Energieausfall verursachte Gerätefehlfunktionen weitgehend vermeiden zu können.

Aus der WO 03/091101 A1 ist es vorbekannt, den Betrieb der Aktuatoren für die Sitzeinstellung etwa in Luftfahrzeugkabinen einer Leistungssteuerung dahingehend zu unterwerfen, dass die gerade verfügbare Leistung auf die aktuellen Anforderungen verteilt und die vom jeweiligen Aktuator angeforderte Leistung entsprechend begrenzt wird.

Um Systemausfälle bei Antriebseinheiten in einander benachbarten Flugzeugsitzplätzen zu vermeiden, können nach der WO 02/076925 A2 deren Stellmotore aus zwei getrennten Netzen versorgt werden. Beide Systeme sind über einen Bus stets darüber informiert, was beim jeweils anderen gerade geschehen soll, um notfalls dort einzugreifen.

Die DE 1 01 00 273 A1 betrifft ein Flugbegleiter-Bediengerät zum Ansteuern von Kabinengeräten über Schnittstellen zu u.a. manueller Verteilung der elektrischen Leistung.

Bei der DE 1 97 10 286 C1 sind in einem Mehrzweckmodul Betriebsprogramme zur Steuerung von Kabinen-Endgeräten unter Berücksichtigung deren abgespeicherter Gerätedaten hinterlegt.

Die WO 03/042797 A2 beschreibt für ein Luftfahrzeugkabinensystem eine Bedienungsvorrichtung, über die nicht nur ein Hauptrechner für die Funktionalitäten der daran angeschlossenen Baugruppen gesteuert wird, sondern auch ein Zusatzrechner für von der Bedienungsvorrichtung unabhängige Funktionen.

Luftfahrzeuge, wie ein Flugzeug, ein Zeppelin oder ein Hubschrauber oder dergleichen, umfassen eine Passagierkabine oder eine Pilotenkabine, die mit einer Anzahl von elektrischen Geräten ausgerüstet ist. Solche Geräte können Überwachungsgeräte, beispielsweise Geräte zur Überwachung des Luftdrucks, der Lufttemperatur und des Sauerstoffgehalts in der Kabine, oder Geräte wie ein Bildschirm in einem Passagiersitz, eine Abwasserüberwachungsvorrichtung oder eine Kochstelle sein. Hierbei wird unterschieden zwischen von einer Luftfahrtgesellschaft im Wesentlichen frei wählbaren ersten Kabinengeräten, beispielsweise die Art und Anzahl einer Bordküchenausrüstung, von Sesselaktuatoren oder Unterhaltungsgeräten (In Flight Entertainment), und zweiten Kabinengeräten, die für die Kabinensicherheit relevant sind, wie beispielsweise Sensoren, Luftversorgungsaktuatoren oder dergleichen, die gemäß unterschiedlichen Prioritäten mit elektrischer Energie zu versorgen sind. In jeder Betriebsphase muß die Bereitstellung des maximalen Energiebedarfes gewährleistet sein, was kostspieligen Generator- und Speicheraufwand bedingt.

Die Art der Kabinengerätesteuerung ist vom Flugzeugtyp abhängig und wird somit vom Flugzeughersteller oder einem Zulieferer erstellt. Die Kabinengeräte selbst sowie die Geräteprogramme zur Steuerung der Kabinengeräte werden von weiteren Zulieferern hergestellt. Zur Steuerung der Kabinengeräte im Luftfahrzeug muss die Luftfahrzeugkabinengerätesteuerung mit ihrer Auslegung der Hardware an die Kabinengeräte sowie deren Geräteprogramme angepasst werden. Da nicht nur jeder Flugzeugtyp in Art und Anzahl unterschiedliche Kabinengeräte umfasst, sondern jedes einzelne Flugzeug an die Wünsche der das Flugzeug bestellenden Luftfahrtgesellschaft angepasst wird, muss die Luftfahrzeugkabinengerätesteuerung für jedes Luftfahrzeug einzeln zugeschnitten werden, was aufwändig und kostenintensiv ist.

Der Erfindung liegt die technische Problemstellung zugrunde, bei einer Luftfahrzeugkabinengerätesteuerung die Leistungsverteilung unter Berücksichtigung sicherheitstechnischer Vorgaben leichter anpassbar zu realisieren.

Diese Aufgabe wird gemäß den im Hauptanspruch angegebenen Merkmalen gelöst. Danach ist ein Konfigurationsmanager vorgesehen, der dazu vorbereitet ist, Gerätedaten aufzunehmen und zu speichern, die sowohl den Umfang der zu steuernden Kabinengeräte als auch die Kabinengeräte selbst charakterisieren, und auf der Grundlage der Gerätedaten in Verbindung mit das Luftfahrzeug charakterisierenden Daten Konfigurationen einzurichten, die der Steuerung der Kabinengeräte zugrunde liegen.

Eine Anpassung einer vorhandenen Luftfahrzeugkabinengerätesteuerung an Kabinengeräte wäre nämlich zu aufwändig, wenn eine größere Anzahl von unterschiedlichen Hardwarekomponenten, die auf die Kabinengeräte zugeschnitten sind, in die Luftfahrzeugkabinengerätesteuerung integriert werden müssten. Grundsätzlich einfacher ist eine Anpassung zu erreichen, wenn sie in zumindest wesentlichem Umfang durch eine Programmierung einer Standardhardware erfolgen kann. Hierzu werden Schnittstellen, üblicherweise eine Anzahl von auf einer Leiterplatte angeordneten Elektronikbausteinen mit einem angegliederten Kontaktierungsbereich, geschaffen, die zu einer Kommunikation mit allen oder zumindest einer signifikanten Anzahl unterschiedlicher in Luftfahrzeugen verwendeter Kabinengeräte in der Lage sind. Die Erstellung solcher Schnittstellen ist einfach und preiswert möglich. Auf diese Weise kann eine Standard-Steuerungshardware geschaffen werden, die beispielsweise nur noch in ihrer Leistungsfähigkeit an verschiedene Flugzeugtypen oder die Wünsche einer Luftfahrtgesellschaft anzupassen ist. Zu solcher Anpassung der Luftfahrzeugkabinengerätesteuerung an einen Flugzeugtyp oder eine gewünschte Kabinengeräteausrüstung müsste allerdings der Flugzeughersteller oder der Zulieferer der Steuerung jede Steuerung einzeln programmieren.

Eine solche Anpassung der Luftfahrzeugkabinengerätesteuerung wird aber vereinfacht, indem im Rahmen vorliegender Erfindung ein Konfigurationsmanager der Steuerung der Kabinengeräte zugrunde liegende Anfangskonfigurationen auf der Grundlage von Gerätedaten und Luftfahrzeugdaten einrichtet. Die Luftfahrtgesellschaft oder der Luftfahrzeugbauer müssen dann nur noch die Gerätedaten und Luftfahrzeugdaten eingeben und nicht mehr in die Konfiguration der Hardware eingreifen. Außerdem kann die Konfigurierung in verschiedene Ebenen unterteilt werden: In einen Bereich, den der Steuerungshersteller oder die Luftfahrtgesellschaft entsprechend fest im Luftfahrzeug installierter, sicherheitsrelevanter zweiter Kabinengeräte einrichtet, und in einen Bereich, den die das Luftfahrzeug betreibende Luftfahrtgesellschaft einrichten kann.

Dem Konfigurationsmanager werden über beispielsweise eine Tastatur oder eine CD-Rom Gerätedaten eingespielt, die den Umfang sowie spezielle Charakterisierungen der Kabinengeräte wiedergeben; sowie Luftfahrzeugdaten, die beispielsweise die Art und Größe des Luftfahrzeugs oder vorhandene Steuerungshardware charakterisieren. Die Einstellung der Steuerung, wie beispielsweise das Setzen von Flags oder von Steuerungseckdaten, wie insbesondere der Rahmendaten zur Verteilung elektrischer Leistung an einzelne Kabinengeräte, Gruppen von Kabinengeräten oder die Gesamtheit der Kabinengeräte wird vom Konfigurationsmanager vorgenommen. Der Konfigurationsmanager kann eine Hardware und Software umfassende Vorrichtung sein oder nur eine Software, die in die Datenverarbeitungseinrichtung integriert ist.

Vorteilhafterweise sind die das Luftfahrzeug charakterisierenden Daten die Anzahl und Art der vorhandenen Schnittstellen der Steuerungshardware; und der Konfigurationsmanager ist dazu vorgesehen, die Weiterleitung von durch ein Geräteprogramm zustande gekommenen Signalen zu einer Schnittstelle einzurichten. Diese Weiterleitung, auch Routing genannt, kann auf diese Weise sehr einfach und zu einem beliebigen Zeitpunkt, beispielsweise nach der Durchführung von Wartungsarbeiten, durchgeführt werden. Das Routing kann einfach vorgenommen werden, ohne dass ein Bediener in einer unteren Ebene der Luftfahrzeugkabinengerätesteuerung programmieren muss.

Zweckmäßigerweise umfasst die Steuerungshardware mehrere gleichartige Schnittstellen, so dass das Routing von Steuerungssignalen zu einer beliebigen der gleichartigen Schnittstellen durchgeführt werden kann, wodurch ein hoher Grad an Flexibilität erreicht wird.

Solche Schnittstellen weisen jeweils einen Kontaktierungsbereich und eine Signalverarbeitungseinheit auf; und der Konfigurationsmanager ist dazu vorgesehen, die Arbeitsweise einer Signalverarbeitungseinheit auf Gerätesignale eines anzuschließenden Kabinengeräts einzustellen. Kabinengeräte, wie beispielsweise Sensoren, senden Signale aus, die einen Zustand der Kabinengeräte beschreiben. Diese Signale müssen ausgelesen, ggf. digitalisiert und weiterverarbeitet werden, um sie zur Steuerung von beispielsweise Aktuatoren verwenden zu können. Dieses Auslesen kann durch die Signalverarbeitungseinheit geschehen, die hierbei zum Auslesen und ggf. Weiterverarbeiten der Gerätesignale eingestellt sein muss. Eine solche Einstellung kann vorprogrammiert und dem Konfigurationsmanager zur Verfügung gestellt werden, so dass das Anpassen der Signalverarbeitungseinheit auf die Gerätesignale des jeweils anzuschließenden Kabinengeräts nach der Zuweisung der Schnittstelle zu einem Kabinengerät einfach und schnell durchgeführt werden kann.

Zweckmäßigerweise ist der Konfigurationsmanager dazu vorbereitet, der Datenverarbeitungseinrichtung Hardwaredaten zu übermitteln, die die Anzahl und Belegung der vorhandenen Schnittstellen charakterisieren. Es sind auf diese Weise im Wesentlichen beliebige Zusammenstellungen von Standardschnittstellen mit einer Standarddatenverarbeitungseinrichtung oder mehreren Standarddatenverarbeitungseinrichtungen auf einfache Weise kombinierbar. Insbesondere ist der Konfigurationsmanager dazu vorbereitet, der Datenverarbeitungseinrichtung die Anzahl und Art ggf. vorhandener weiterer Datenverarbeitungseinrichtungen zu übermitteln. Die Leistungsfähigkeit der Luftfahrzeugkabinengerätesteuerung kann so auf einfache Weise den Anforderungen der zu steuernden Kabinengeräte angepasst werden.

Zweckmäßigerweise ist der Konfigurationsmanager auch dazu vorbereitet, auf eine auf ein Kabinengerät bezogene Fehlerroutine zuzugreifen und die darin enthaltenen Befehle zu einer Ausführung zu bringen. Auf diese Weise kann ein zentrales Fehlermanagement beim Konfigurationsmanager eingerichtet werden, so, dass ein dezentrales Fehlermanagement bei den Geräteprogrammen zur Steuerung der Kabinengeräte entfallen kann. Hierdurch können nicht nur die Geräteprogramme vereinfacht werden, es kann auch das Fehlermanagement an die Geräteumgebung und/oder die Flugsituation des Luftfahrzeugs angepasst werden. So kann beispielsweise in der Startphase des Luftfahrzeugs anders auf einen Fehler eines Kabinengeräts reagiert werden, als in einer normalen Flugphase oder während des Wartens auf einem Rollfeld. Es kann außerdem das Geräteumfeld berücksichtigt werden, wobei beispielsweise Fehler weiterer Kabinengeräte in die Fehlerroutine mit einbezogen werden.

In einer weiteren Ausgestaltung der Erfindung ist der Konfigurationsmanager dazu vorbereitet, Umgebungsdaten in Verbindung mit der Fehlerroutine zu verarbeiten und aus dieser Verarbeitung resultierende Befehle zur Ausführung zu bringen. Solche Umgebungsdaten sind insbesondere das Luftfahrzeug charakterisierende Daten, wie beispielsweise die Größe des Luftfahrzeugs, die maximal erzeugbare elektrische Leistung im Luftfahrzeug oder ähnliches. So kann beispielsweise beim Ausfall eines Ventilators die Leistung anderer Ventilatoren zum Ausgleich erhöht werden, wenn das Luftfahrzeug die entsprechende Leistung zur Verfügung stellen kann. Es ist auch möglich, dass die Daten die momentane Situation des Luftfahrzeugs charakterisieren. Dadurch kann mit einbezogen werden, ob sich das Luftfahrzeug in der Start- oder Landephase befindet, auch die Entfernung vom angestrebten Reiseziel, die Flughöhe, Turbulenzen oder andere Situationen können berücksichtigt werden. Dadurch wird eine an die Flugsituation angepasste Fehlerroutine erreicht. Es ist auch möglich, dass die Daten die Konstellation weiterer Kabinengeräte charakterisieren. Auf diese Weise kann in die Fehlerroutine einbezogen werden, ob ein einziges vorhandenes Gerät einer Art ausfällt oder ob weitere gleichartige Geräte vorhanden sind, die beispielsweise den Fehler ausgleichend einspringen können. Ferner können die Daten die momentane Situation mindestens eines weiteren Kabinengeräts charakterisieren. So kann der Zustand oder die Funktionsfähigkeit weiterer, insbesondere gleichartiger Kabinengeräte in die Fehlerroutine mit einbezogen werden, wie auch der Lastbereich von Kabinengeräten. Es ist vorteilhaft, wenn der Konfigurationsmanager auch zu einer umstandsbedingten Änderung der Weiterleitung von durch ein Geräteprogramm zustande gekommenen Signalen zu einer Schnittstelle vorbereitet ist. Auf diese Weise kann das Routing während des Betriebs ohne großen Aufwand verändert werden. Ist beispielsweise eine Schnittstelle überlastet oder ganz oder teilweise ausgefallen, dann können Signale vom mit der Schnittstelle verbundenen Kabinengerät auf eine andere Schnittstelle umgeleitet werden. Das Kabinengerät kann so unter Umgehung des Defekts weiter genutzt werden.

Indem zwischen zwei Schnittstellen eine schaltbare Signalvermittlungseinrichtung angeordnet ist, ist der Konfigurationsmanager zur Schaltung der Signalvermittlungseinrichtung vorbereitet. Die Umleitung der Signale kann dann durch eine einfache Schaltung der Signalvermittlungseinrichtung erreicht werden. Solch eine Signalvermittlungseinrichtung ist zweckmäßigerweise zwischen Kontaktierungsbereichen von Schnittstellen angeordnet, wodurch eine Signalverarbeitungseinheit komplett umgangen werden kann.

Außerdem weist die Luftfahrzeugkabinengerätesteuerung eine redundante, durch den Konfigurationsmanager zuschaltbare Schnittstelle auf. Bei Ausfall einer Schnittstelle kann diese Schnittstelle zugeschaltet und das betreffende Kabinengerät darüber funktionsfähig gehalten werden.

Vor allem aber weist die erfindungsgemäße Luftfahrzeugkabinengerätesteuerung eine Leistungsregelvorrichtung auf, die zur Verteilung von elektrischer Leistung nach einem Leistungsverteilungsschlüssel zu Kabinengeräten vorgesehen ist; wobei die das Luftfahrzeug charakterisierenden Daten die Maximalleistung ist, die den Kabinengeräten maximal zur Verfügung gestellt werden soll. Es kann auf diese Weise eine Grundkonfiguration einer flexiblen Leistungsverteilung zu Kabinengeräten eingerichtet werden. Dem Konfigurationsmanager wird insbesondere die Maximalleistung, die Anzahl und Art der mit elektrischer Leistung zu versorgenden Kabinengeräte sowie deren Funktionsweise eingegeben. Aus diesen Daten kann der Konfigurationsmanager eine Grundkonfiguration festlegen, welchem Kabinengerät bei welcher Situation wie viel Leistung zur Verfügung gestellt wird. Hierdurch kann die Maximalleistung unter allen vom Konfigurationsmanager einbezogenen Kabinengeräten ohne Unterteilung flexibel verteilt werden.

Es wird hiermit das Problem gelöst, dass eine Leistungssteuerung eine festgelegte Leistung bisher nur innerhalb von einzelnen Gerätegruppen, beispielsweise alle Geräte um einen Sitzplatz herum oder alle Geräte einer Bordküche, verteilen konnte. Eine Einbeziehung aller Kabinengeräte war nicht möglich, da die zentrale Steuerung fehlte, die Leistungsdaten vieler verschiedener Kabinengeräte umfasste, die an verschiedenen Leistungssträngen angeordnet sind. Über den Konfigurationsmanager wird nun eine Maximalleistung, die beispielsweise auf die Gesamtheit aller vorhandenen Kabinengeräte bezogen ist, flexibel unter allen Kabinengeräten verteilt. Es müssen keine Untergruppen mit jeweils Untermaximalleistungen gebildet werden. Auf diese Weise kann bei gleicher Maximalleistung wesentlich mehr Leistung an die Kabinengeräte verteilt werden, oder die Maximalleistung kann wesentlich geringer bemessen werden; so dass das Luftfahrzeug jedenfalls energiesparen-der ausgelegt werden kann. Der Leistungsverteilungsschlüssel kann dem Konfigurationsmanager frei eingegeben und an die Wünsche beispielsweise einer Luftfahrtgesellschaft angepasst werden.

Ein weiterer Vorteil wird dadurch erreicht, dass der Leistungsverteilungsschlüssel zwischen ersten Kabinengeräten und für die Kabinensicherheit relevanten zweiten Kabinengeräten unterscheidet, wobei die ersten Kabinengeräte mit einem offenen Datenübertragungsnetz und die zweiten Kabinengeräte mit einem, vom offenen Datenübertragungsnetz durch einen Firewall getrennten geschlossenen Datenübertragungsnetz verbunden sind. Hierdurch können auch die zweiten Kabinengeräte in eine flexible Leistungsverteilung einbezogen werden, so dass bei nicht voll belasteten zweiten Kabinengeräten freie Leistung aus dem Bereich der zweiten Kabinengeräte den ersten Kabinengeräten zur Verfügung gestellt werden kann. Der Schlüssel für die zweiten Kabinengeräte, die für die Kabinensicherheit relevant sind, sollte beispielsweise vorsehen, dass diese Geräte bei einem Leistungsengpass grundsätzlich mit der von ihnen angeforderten Leistung versorgt werden, wobei der Schlüssel für die ersten Kabinengeräte eine Zwangsteillast oder eine Zwangsabschaltung für erste Kabinengeräte vorsehen kann.

Grundsätzlich ist es möglich, die Maximalleistung für einzelne Gruppen, beispielsweise für erste und zweite Kabinengeräte, in getrennte Untermaximalleistungen zu unterteilen und die Leistung innerhalb der Gruppen unabhängig von der momentanen Leistungsaufnahme anderer Gruppen zuzuweisen. Die Gruppeneinteilung und die Zuweisung von Untermaximalleistungen kann hierbei durch den Konfigurationsmanager erfolgen, der sowohl die Einteilung als auch die Untermaximalleistungen mit Luftfahrzeugs- oder Situationsparametern verknüpfen kann.

Eine besonders flexible Leistungsverteilung kann erreicht werden, wenn der Leistungsverteilungsschlüssel mindestens 75% der mit dem offenen Netz verbundenen Kabinengeräte des Luftfahrzeugs umfasst und die Leistungsregelvorrichtung die Leistungsaufnahme der Kabinengeräte überwacht und die von den Kabinengeräten insgesamt angeforderte Leistung bis zu einem Schwellenwert freigibt. Die Hauptlast im Luftfahrzeug kann mit diesen Kabinengeräten abgedeckt werden, wobei sich die Prozentangabe auf den Leistungsanteil der Kabinengeräte bezieht. Der Schwellenwert ist ein Leistungswert, oberhalb dessen keine oder nur noch eingeschränkt Leistung verteilt wird, beispielsweise indem allen oder ausgewählten Kabinengeräten nur noch ein Teil der angeforderten Leistung zugeteilt wird. Der Schwellenwert kann die Maximalleistung, eine Untermaximalleistung oder ein Wert unter der Maximalleistung bzw. der Untermaximalleistung sein.

Zweckmäßigerweise ist die Leistungsregelvorrichtung dazu vorbereitet, eine erste maximale Gruppenleistung für die ersten Kabinengeräte und eine zweite maximale Gruppenleistung für die zweiten Kabinengeräte festzulegen. Insbesondere können die beiden maximalen Gruppenleistungen in Abhängigkeit voneinander festgelegt werden. Es kann eine hohe Flexibilität bei der Leistungsverteilung an die Kabinengeräte erreicht werden.

Eine hohe Sicherheit verbunden mit einer flexiblen Leistungsverteilung kann erreicht werden, wenn der Leistungsverteilungsschlüssel einen ersten den ersten Kabinengeräten zugeordneten Schlüssel und einen zweiten den zweiten Kabinengeräten zugeordneten Schlüssel aufweist, wobei der Konfigurationsmanager dazu vorbereitet ist, den ersten Schlüssel zur freien Programmierung freizugeben und den zweiten Schlüssel zu sperren. Der erste Schlüssel ist z.B. von der das Luftfahrzeug betreibenden Luftfahrtgesellschaft zumindest innerhalb vorgegebener Grenzen frei wählbar und konfigurierbar. Der Schlüssel kann so von der Luftfahrtgesellschaft zu jedem Zeitpunkt einfach an eine individuell gestaltete Einrichtung des Luftfahrzeugs angepasst werden. Durch den gesperrten zweiten Schlüssel, der zweckmäßigerweise vom Hersteller des Luftfahrzeugs festgelegt wird, kann sicherheitsrelevanten Kabinengeräten grundsätzlich ausreichende Leistung zur Verfügung gestellt werden, so dass die Sicherheit in der Kabine unabhängig von der Einrichtung des Luftfahrzeugs gewahrt bleibt.

Vorteilhafterweise umfasst der Leistungsverteilungsschlüssel einen dritten Schlüssel, der unterschiedlichen Flugphasen eines Luftfahrzeugs zugeordnet ist, und bei freier Programmierbarkeit des ersten und/oder zweiten Schlüssels sperrbar ist. Es kann, unabhängig von der Ausstattung des Luftfahrzeugs mit sicherheitsrelevanten Kabinengeräten, also unabhängig vom zweiten Schlüssel, ein für beispielsweise kritische Flugsituationen vorgesehener Schlüssel zur Verteilung von Leistung zu Kabinengeräten eingerichtet werden, die in diesen Situationen so weit wie möglich funktionsfähig bleiben müssen.

Es wird des Weiteren vorgeschlagen, dass der Konfigurationsmanager dazu vorbereitet ist, die Obergrenze der zur Verfügung stehenden Leistung nach vorgegebenen Regeln variabel unterhalb der Maximalleistung festzulegen. Die Maximalleistung kann so von der vom Luftfahrzeug maximal aufbringbaren Leistung entkoppelt und an gewünschte Vorgaben angepasst werden. Die Maximalleistung kann z.B. an einen angestrebten Treibstoffverbrauch angepasst werden.

Zusätzliche Sicherheit kann erreicht werden, indem die Obergrenze flugphasenabhängig festgelegt wird. In Flugphasen, in denen weniger elektrische Leistung erzeugt werden kann, wie in der Startphase oder bei kritischen Flugsituationen, kann die Obergrenze gedrosselt werden, so dass die Triebwerke mehr Leistung für Schub aufbringen können. Insbesondere kann Kabinengeräten schnell weniger als die angeforderte Leistung zugewiesen werden, wenn unvorhergesehen mehr Schub verlangt wird.

Es wird außerdem vorgeschlagen, dass erste Kabinengeräte unter Umgehung des Firewalls über Leistungsschalter mit der Leistungsverteilungseinrichtung verbunden sind. Es wird der Datenaustausch über den Firewall gering gehalten und eine direkte Ansteuerung der Leistungsschalter erreicht.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleichartige Elemente sind mit gleichen Bezugszeichen versehen.

Es zeigen:
- Fig. 1: eine schematische Darstellung einer Luftfahrzeugkabinengerätesteuerung,
- Fig. 2: eine schematische Darstellung einer Luftfahrzeugkabinengerätesteuerung mit mehreren Datenverarbeitungseinrichtungen und
- Fig. 3: eine schematische Darstellung einer Einbettung einer Luftfahrzeugkabinengerätesteuerung in Schaltstrukturen eines Luftfahrzeugs.

### Beschreibung der Ausführungsbeispiele

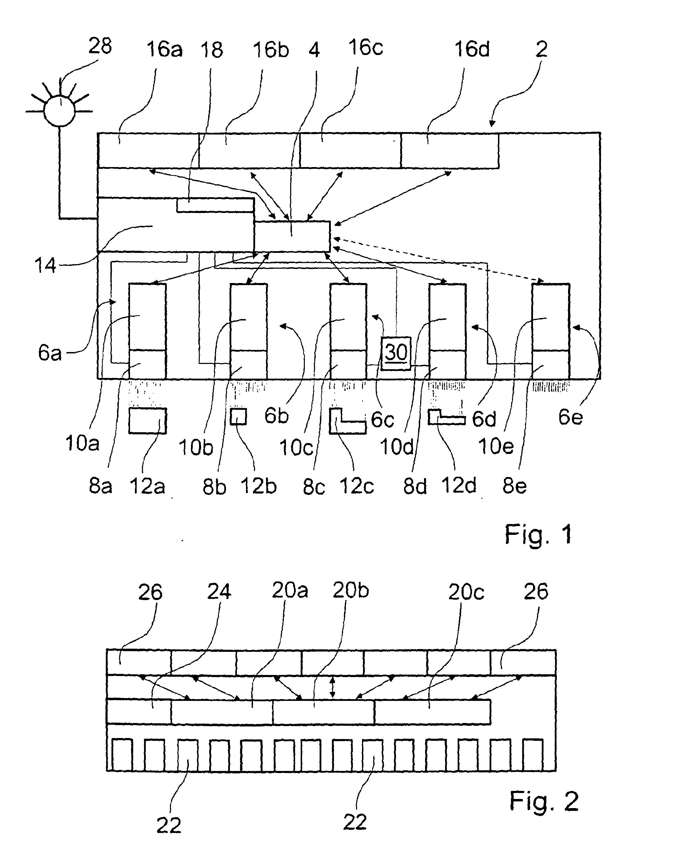

Figur 1 zeigt eine Luftfahrzeugkabinengerätesteuerung 2 in einer schematischen Darstellung mit einer Datenverarbeitungseinrichtung 4 und mehreren Schnittstellen 6a - 6e. Die Schnittstellen 6a - 6e umfassen jeweils einen Kontaktierungsbereich 8a - 8e und eine Signalverarbeitungseinheit 10a - 10e. Die Kontaktierungsbereiche 8a - 8e sind mit durch Striche angedeuteten Kontaktierungsstiften versehen, von denen eine jeweils benötigte Anzahl über Leitungen mit jeweils einem Kabinengerät 12a - 12d verbunden ist. Hierbei müssen nicht alle Kontaktierungsstifte belegt sein. Die Kontaktierungsstifte der Schnittstelle 6e sind mit keinem Kabinengerät verbunden. Ebenfalls in der Luftfahrzeugkabinengerätesteuerung 2 enthalten ist ein Konfigurationsmanager 14, der eine eigene Hardware umfasst und mit einer nicht gezeigten Schnittstelle mit der Datenverarbeitungseinrichtung 4 verbunden ist.

Die Luftfahrzeugkabinengerätesteuerung 2 umfasst außerdem Geräteprogramme 16a - 16d, die auf die Kabinengeräte 12a - 12d zugeschnitten und zur Steuerung der Kabinengeräte 12a - 12d vorgesehen sind. Ebenfalls als Software ist im Konfigurationsmanager eine Fehlerroutine 18 enthalten, die situationsbezogene Anweisungen zur Behandlung von Fehlern in den Kabinengeräten 12a - 12d oder den Schnittstellen 6a - 6e umfasst.

Bei der Herstellung der Luftfahrzeugkabinengerätesteuerung 2 durch einen Steuerungshersteller kann zunächst eine Basis aus der Datenverarbeitungseinrichtung 4, Speicherplatz für Geräteprogramme und Schnittstellen 6a - 6e geschaffen werden, die auf die Anzahl und den Steuerungsaufwand der zu steuernden Kabinengeräte angepasst sein kann. Die Anpassung kann derart erfolgen, dass neben einer in Figur 2 gezeigten ersten Datenverarbeitungseinrichtung 20a weitere Datenverarbeitungseinrichtungen 20b, 20c vorgesehen sind, die die Datenverarbeitung parallel bewältigen. Auch die Anzahl der Schnittstellen 22 kann an die Anzahl der Kabinengeräte angepasst werden. Die Schnittstellen 6a - 6e und 22 sind alle gleich, wobei sie so ausgelegt sind, dass mit dieser Art Schnittstelle jedes einzelne der Kabinengeräte gesteuert werden kann. Es ist alternativ auch möglich, eine kleine Anzahl Standards vorzusehen, beispielsweise drei verschiedene Arten von Schnittstellen, mit niedriger, mittlerer oder hoher Anzahl der Kontaktierungsstifte, Datenverarbeitungsrate, Komplexität der Signalverarbeitungseinheit oder dergleichen. Die Basis der Luftfahrzeugkabinengerätesteuerung 2 kann dann mit einem als Software oder als Hard- und Software ausgestalteten Konfigurationsmanager 14, 24 versehen werden.

Die Einstellung der Luftfahrzeugkabinengerätesteuerung 2 auf die zu steuernden Kabinengeräte 12a - 12d kann auf einfache Weise durch das Einspielen von Software geschehen. Hierbei werden die Geräteprogramme 16a - 16d, 26 geladen, und dem Konfigurationsmanager 14, 24 werden Gerätedaten mitgeteilt, die sowohl den Umfang der zu steuernden Kabinengeräte 12a - 12d als auch die Kabinengeräte 12a - 12d selbst charakterisieren, beispielsweise die Art der abgegebenen Zustandssignale oder der erwarteten Steuersignale. Außerdem werden dem Konfigurationsmanager 14, 24 die Art und Anzahl der vorhandenen Schnittstellen 6a - 6e, 22 und Datenverarbeitungseinrichtungen 4, 20a - 20c und die Verknüpfungen der Kabinengeräte 12a - 12d mit den Schnittstellen 6a - 6e, 22 mitgeteilt. Zusätzlich kann dem Konfigurationsmanager 14 die Fehlerroutine 18 eingespielt werden, die situationsbezogene, luftfahrzeugbezogene und kabinengerätebezogene Anweisungen enthält.

Der Konfigurationsmanager 4, 24 kann nun auf der Grundlage der eingegebenen Daten die Konfigurationen einrichten, die der Steuerung der Kabinengeräte 12a - 12d zugrunde liegen. Diese Konfigurationen umfassen die Einstellung der Signalverarbeitungseinheiten 10a-10d auf die jeweils angeschlossenen Kabinengeräte 12a - 12d und die durch Doppelpfeile angedeutete Zuordnung der von einem Geräteprogramm 16a - 16d, 26 gegebenen Anweisung zu der oder den betreffenden Schnittstellen 6a - 6d, 22 und dem oder den betreffenden Kabinengeräten 12a - 12d. Gegebenenfalls können die Konfigurationen auch die Anweisungen zur Zusammenarbeit von mehreren Datenverarbeitungseinrichtungen 24 oder Schnittstellen 22 umfassen.

Zusätzlich zur Einrichtung der Konfigurationen kann der Konfigurationsmanager 14 während des Betriebs des Luftfahrzeugs, in dem er zur Wirkung kommt, die Steuerung der Kabinengeräte 12a - 12d überwachen oder in die Steuerung eingreifen. Dies kann beispielsweise bei einem Defekt eines Kabinengeräts 12a - 12d oder einer Schnittstelle 6a - 6d oder anderer steuerungsrelevanter Bauteile geschehen. Das situationsbezogene Vorgehen des Konfigurationsmanagers 14 ist in der Fehlerroutine 18 hinterlegt. Der Konfigurationsmanager 14 ist mit einem Netzwerk 28 verbunden, das wiederum mit in der Figur nicht gezeigten Steuergeräten des Luftfahrzeugs verbunden ist. Aus diesen Steuergeräten können die momentane Situation des Luftfahrzeugs charakterisierende Daten dem Konfigurationsmanager 14 zugeleitet und in die Fehlerbehandlung einbezogen werden.

Bei einem Defekt einer Schnittstelle 6a - 6d kann der Konfigurationsmanager 14 außerdem das Routing ändern, indem die Aufgaben der defekten Schnittstelle 6a - 6d beispielsweise einer redundanten Schnittstelle 6e übertragen werden. Die Kontaktierungsbereiche 8a - 8e der Schnittstellen 6a - 6e sind hierfür mit dem Konfigurationsmanager 14 verbunden, so dass von einem Kabinengerät 12a - 12d kommende Signale direkt zum Konfigurationsmanager 14 und von dort über ein nicht dargestelltes Schaltelement zur redundanten Schnittstelle 6e geleitet, dort verarbeitet und zur Datenverarbeitungseinrichtung 4 gesandt werden können. Zum Ausgleich einer momentanen Überlast oder eines Defekts einer Schnittstelle 6c, 6d sind die Schnittstellen 6c, 6d durch ein Schaltelement 30 miteinander verbunden, so dass die Schnittstellen 6c, 6d gegenseitig Aufgaben übernehmen können. Dies ist besonders bei gleichartigen Kabinengeräten 12c, 12d günstig.

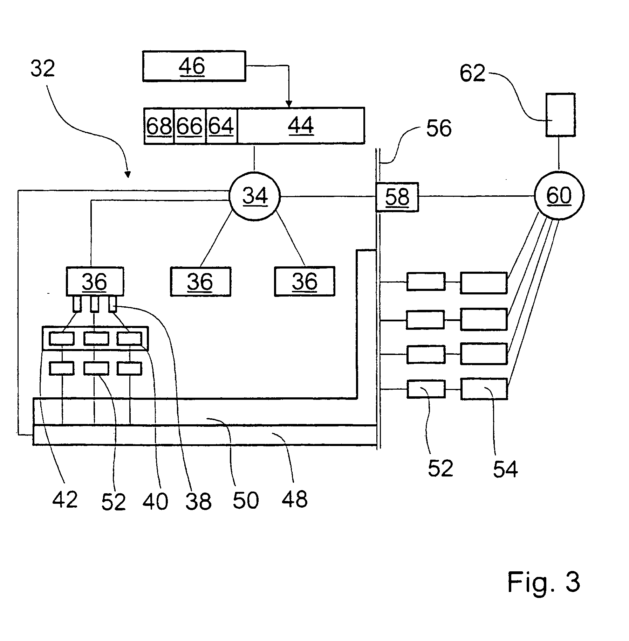

Figur 3 zeigt die Einbettung einer Luftfahrzeugkabinensteuerung 32 in die Umgebung eine Luftfahrzeugs in einer schematischen Darstellungsweise. Die Luftfahrzeugkabinensteuerung 32 umfasst mehrere mit einem geschlossenen Datenübertragungsnetz 34 verbundene Steuereinheiten 36 mit jeweils einer nicht explizit gezeigten Datenverarbeitungseinrichtung und Schnittstellen 38. Mit den Schnittstellen 38 verbunden sind jeweils für die Kabinensicherheit relevante zweite Kabinengeräte 40, die zu Geräteeinheiten 42 miteinander verbunden sind, von denen der Übersichtlichkeit halber nur eine gezeigt ist. Die gezeigte Geräteeinheit 42 umfasst die Luftversorgung der Kabine des Luftfahrzeugs. Die weiteren nicht gezeigten Steuereinheiten umfassen beispielsweise eine Kabinendruckregelung, Klimaregelungen, Leck- und Überhitzungsüberwachungen, Wasser- und Abwasserregelung usw. Ebenfalls mit dem geschlossenen Datenübertragungsnetz 34 verbunden ist ein Konfigurationsmanager 44, der zur Datenaufnahme über ein Dateneingabemittel 46 vorbereitet ist. Des Weiteren ist eine Leistungsregelvorrichtung 48 mit einer Leistungsverteilvorrichtung 50 mit dem Datenübertragungsnetz 34 verbunden. Leistungsschalter 52 sind zwischen der Leistungsverteilvorrichtung 50 und den zweiten Kabinengeräten 40 angeordnet.

Durch einen angedeuteten Firewall 56 hindurch sind weitere Leistungsschalter 52 sowohl mit der Leistungsverteilvorrichtung 50 als auch ersten Kabinengeräten 54 verbunden, die für die Kabinensicherheit keine erhebliche Relevanz haben. Diese ersten Kabinengeräte 54 sind Unterhaltungsgeräte (In Flight Entertainment), Küchengeräte, Sitzaktuatoren, Beleuchtungskörper u.v.a.m. Das geschlossene Datenübertragungsnetz 34 ist durch eine Sicherheitsschnittstelle 58 mit einem offenen Datenübertragungsnetz 60 verbunden, das beispielsweise über eine Satellitenschnittstelle 62 nach außen verbunden ist.

Zum Betrieb der Luftfahrzeugkabinensteuerung 32 erstellt der Konfigurationsmanager 44 aus Gerätedaten sowie der Maximalleistung, die den Kabinengeräten 40, 54 zur Verfügung gestellt werden soll, als Konfiguration einen Leistungsverteilungsschlüssel und übergibt diesen an die Leistungsregelvorrichtung 48. Die Leistungsregelvorrichtung 48 regelt die Leistungsverteilung über die Leistungsverteilvorrichtung 50 und die Leistungsschalter 52 zu den Kabinengeräten (40, 54). Die Maximalleistung ist die Leistung, die allen zur Kabine des Luftfahrzeugs zugeordneten Kabinengeräten 40, 54 insgesamt maximal zugeteilt werden soll.

Der Leistungsverteilungsschlüssel umfasst drei Schlüssel 64, 66, 68, wobei der erste Schlüssel 64 ersten Kabinengeräten 54 zugeordnet ist und von einem Luftfahrzeugbetreiber, z.B. einer Airline, in Grenzen frei programmierbar ist. Der zweite Schlüssel 66 ist den zweiten Kabinengeräten 40 zugeordnet, denen eine höhere Leistungsversorgungspriorität eingeräumt wird als den ersten Kabinengeräten 54. Der zweite Schlüssel 66 wird in Abhängigkeit von der Kabinenausrüstung vom Luftfahrzeughersteller oder einem Zulieferer programmiert und ist gegen einen Zugriff einer Airline sperrbar. Der dritte Schlüssel ist kritischen Flugsituationen zugeordnet und ist gegen eine Umprogrammierung ebenfalls sperrbar, so dass nur der Luftfahrzeughersteller oder ein Zulieferer darauf Zugriff hat.

Eine unterhalb der Maximalleistung liegende Obergrenze von an Kabinengeräte 40, 54 abgegebener Leistung wird vom Konfigurationsmanager 44 flugphasenabhängig variabel eingerichtet. Überschreitet die von den Kabinengeräten 40, 54 angeforderte Leistung einen Schwellenwert, der bei 90% der Obergrenze liegt, wird ersten Kabinengeräten nur noch eingeschränkt Leistung zur Verfügung gestellt.

### Bezugszeichen

- 2: Luftfahrzeugkabinengerätesteuerung
- 4: Datenverarbeitungseinrichtung
- 6a-6e: Schnittstelle
- 8a-8e: Kontaktierungsbereich
- 10a-10e: Signalverarbeitungseinheit
- 12a-12d: Kabinengerät
- 14: Konfigurationsmanager
- 16a-16d: Geräteprogramm
- 18: Fehlerroutine
- 20a-20c: Datenverarbeitungseinrichtung
- 22: Schnittstelle
- 24: Konfigurationsmanager
- 26: Geräteprogramm
- 28: Netzwerk
- 30: Schaltelement
- 32: Luftfahrzeugkabinensteuerung
- 34: Datenübertragungsnetz
- 36: Steuereinheit
- 38: Schnittstelle
- 40: Kabinengerät
- 42: Geräteeinheit
- 44: Konfigurationsmanager
- 46: Dateneingabemittel
- 48: Leistungsregelvorrichtung
- 50: Leistungsverteilvorrichtung
- 52: Leistungsschalter
- 54: Kabinengerät
- 56: Firewall
- 58: Sicherheitsschnittstelle
- 60: Datenübertragungsnetz
- 62: Satellitenschnittstelle
- 64: Schlüssel
- 66: Schlüssel
- 68: Schlüssel

## Patentansprüche

1. Luftfahrzeugkabinengerätesteuerung (2, 32)
- mit einer Steuerungshardware,
die eine Datenverarbeitungseinrichtung (4, 20a - 20c) und mehrere Schnittstellen (6a - 6e, 22, 38) zur Verbindung mit Kabinengeräten (12a - 12d, 40, 54) eines Luftfahrzeugs umfasst,
- mit Geräteprogrammen (16a - 16d, 26)
zur Steuerung der Kabinengeräte (12a - 12d, 40, 54)
- mit einem Konfigurationsmanager (14, 24, 44),
der dazu vorbereitet ist, Gerätedaten aufzunehmen und zu speichern,
die sowohl den Umfang der zu steuernden Kabinengeräte (12a - 12d, 40, 54) als auch die Kabinengeräte (12a - 12d, 40, 54) selbst charakterisieren,
und auf der Grundlage der Gerätedaten in Verbindung mit das Luftfahrzeug charakterisierenden Daten Konfigurationen einzurichten, die der Steuerung der Kabinengeräte (12a - 12d, 40, 54) zugrunde liegen,
- mit zwei Datenübertragungsnetzen (60, 34),
von denen ein offenes Datenübertragungsnetz (60) mit den ersten, nicht-sicherheitsrelevanten Kabinengeräten (54) verbunden ist,
und ein zweites, vom offenen Datenübertragungsnetz (60) durch eine Firewall (56) mit Sicherheitsschnittstelle (58) getrenntes, geschlossenes Datenübertragungsnetz (34) mit den für die Kabinensicherheit relevanten zweiten Kabinengeräten (40) verbunden ist, und
- mit einer Leistungsregelvorrichtung (48)
zur Verteilung von elektrischer Leistung zu Kabinengeräten (12a - 12d, 40, 54), wofür
- der Konfigurationsmanager (14, 24, 44), nach Maßgabe der Gerätedaten und einer vorgegebenen, den Kabinengeräten (12a - 12d, 40, 54) maximal zur Verfügung zu stellenden Maximalleistung, an die Leistungsregelvorrichtung (48) einen Leistungsverteilungsschlüssel liefert,
der zwischen den nicht-sicherheitsrelevanten ersten Kabinengeräten (54) und den sicherheitsrelevanten zweiten Kabinengeräten (40) unterscheidet
und nach Maßgabe dessen die Leistungsregelvorrichtung (48) elektrische Leistung über Leistungsschalter (52) zu den Kabinengeräten (12a - 12d, 40, 54) verteilt und dabei den nicht sicherheitsrelevanten Kabinengeräten (54) nur noch eingeschränkte Leistung zur Verfügung stellt, wenn die von den Kabinengeräten (12a - 12d, 40, 54) angeforderte Leistung einen Schwellwert überschreitet,
wobei das Luftfahrzeug durch die Maximalleistung charakterisiert ist, die den Kabinengeräten (12a - 12d, 40, 54) maximal zur Verfügung gestellt werden soll.

2. Luftfahrzeugkabinengerätesteuerung nach Anspruch 1 ,
**dadurch gekennzeichnet, dass**
der Leistungsverteilungsschlüssel mindestens 75% der mit dem offenen Datenübertragungsnetz (60) verbundenen ersten Kabinengeräte (54) umfasst und die Leistungsregelvorrichtung (48) die Leistungsaufnahme der Kabinengeräte (12a - 12d, 40, 54) überwacht und die von den Kabinengeräten (12a - 12d, 40, 54) angeforderte Leistung bis zu einem Schwellenwert freigibt.

3. Luftfahrzeugkabinengerätesteuerung nach einem der vorangehenden Ansprüche,
**dadurch gekennzeichnet, dass**
die Leistungsregelvorrichtung (48) dazu vorbereitet ist, eine erste maximale Gruppenleistung für die ersten Kabinengeräte (54) und eine zweite maximale Gruppenleistung für die zweiten Kabinengeräte (40) festzulegen.

4. Luftfahrzeugkabinengerätesteuerung nach dem vorangehenden Anspruch,
**dadurch gekennzeichnet, dass**
die beiden maximalen Gruppenleistungen in Abhängigkeit voneinander festgelegt sind.

5. Luftfahrzeugkabinengerätesteuerung nach einem der vorangehenden Ansprüche,
**dadurch gekennzeichnet, dass**
der Leistungsverteilungsschlüssel einen ersten den ersten Kabinengeräten (54) zugeordneten Schlüssel (64) und einen zweiten den zweiten Kabinengeräten (40) zugeordneten Schlüssel (66) aufweist, wobei der Konfigurationsmanager (4, 24, 44) dazu vorbereitet ist, den ersten Schlüssel (64) zur freien Programmierung freizugeben und den zweiten Schlüssel (66) zu sperren.

6. Luftfahrzeugkabinengerätesteuerung nach dem vorangehenden Anspruch,
**dadurch gekennzeichnet, dass**
der Leistungsverteilungsschlüssel einen dritten Schlüssel (68) aufweist, der unterschiedlichen Flugphasen eines Luftfahrzeugs zugeordnet ist und bei freier Programmierbarkeit des ersten und/oder zweiten Schlüssels (64, 66) sperrbar ist.

7. Luftfahrzeugkabinengerätesteuerung nach einem der vorangehenden Ansprüche,
**dadurch gekennzeichnet, dass**
der Konfigurationsmanager (14, 24, 44) dazu vorbereitet ist, die Obergrenze der zur Verfügung stehenden Leistung nach vorgegebenen Regeln variabel unterhalb der Maximalleistung festzulegen.

8. Luftfahrzeugkabinengerätesteuerung nach dem vorangehenden Anspruch,
**dadurch gekennzeichnet, dass**
die Obergrenze flugphasenabhängig festgelegt ist.

9. Luftfahrzeugkabinengerätesteuerung nach einem der Ansprüche 5 bis 8,
**dadurch gekennzeichnet, dass**
der Konfigurationsmanager (14, 24, 44) auch dazu vorbereitet ist, Umgebungsdaten in Verbindung mit der Fehlerroutine (18) zu verarbeiten und aus dieser Verarbeitung resultierende Befehle zur Ausführung zu bringen, wobei die Umgebungsdaten Daten aus der folgenden Gruppe sind:
- das Luftfahrzeug charakterisierende Daten,
- die momentane Situation des Luftfahrzeugs charakterisierende Daten,
- die Konstellation weiterer Kabinengeräte (12a - 12d, 40, 54) charakterisierende Daten,
- die momentane Situation mindestens eines weiteren Kabinengeräts (12a - 12d, 40, 54) charakterisierende Daten.

10. Luftfahrzeugkabinengerätesteuerung nach einem der vorangehenden Ansprüche,
**dadurch gekennzeichnet, dass**
erste Kabinengeräte (54) unter Umgehung des Firewalls (56) über Leistungsschalter (52) mit einer Leistungsverteilungseinrichtung (50) verbunden sind.

## Claims

1. Aircraft cabin equipment control (2, 32)
- having control hardware
which comprises a data processing device (4, 20a - 20c) and a plurality of interfaces (6a - 6e, 22, 38) for connection to cabin equipment (12a - 12d, 40, 54) in an aircraft,
- having equipment programs (16a - 16d, 26)
for controlling the cabin equipment (12a - 12d, 40, 54)
- having a configuration manager (14, 24, 44)
which is provided in order to record and to store equipment data,
which characterizes both the scope of the cabin equipment (12a - 12d, 40, 54) to be controlled and the cabin equipment (12a - 12d, 40, 54) itself,
and in order to set up configurations which are used as the basis for controlling the cabin equipment (12a - 12d, 40, 54) on the basis of the equipment data in conjunction with data which characterizes the aircraft,
- having two data transmission networks (60, 34) of which one open data transmission network (60) is connected to the first, non-safety-relevant cabin equipment (54),
and a second, closed data transmission network (34), which is separated from the open data transmission network (60) by a firewall (56) with a safety interface (58) and to which second cabin equipment (40), which is relevant for cabin safety, is connected,
and
- having a power control apparatus (48),
for distribution of electrical power to cabin equipment (12a - 12d, 40, 54) for which purpose
- the configuration manager (14, 24, 44) supplies a power distribution key to the power control apparatus (48) on the basis of the equipment data and a predetermined maximum power which is the most which can be made available to the cabin equipment (12a - 12d, 40, 54),
which distinguishes between the non-safety-relevant first cabin equipment (54) and the safety-relevant second cabin equipment (40), and on the basis of which the power control apparatus (48) distributes electrical power via circuit breakers (52) to the cabin equipment (12a - 12d, 40, 54), and in this case makes only a restricted amount of power available to the non-safety-relevant cabin equipment (54) when the power demanded by the cabin equipment (12a - 12d, 40, 54) exceeds a threshold value,
wherein the aircraft is **characterized by** the maximum power which is the most that is intended to be made available to the cabin equipment (12a - 12d, 40, 54).

2. Aircraft cabin equipment control according to Claim 1,
**characterized in that**
the power distribution key comprises at least 75% of the first cabin equipment (54) which is connected to the open data transmission network (60), and the power control apparatus (48) monitors the power consumption of the cabin equipment (12a - 12d, 40, 54), and releases the power demanded by the cabin equipment (12a - 12d, 40, 54) up to a threshold value.

3. Aircraft cabin equipment control according to one of the preceding claims,
**characterized in that**
the power control apparatus (48) is provided to define a first maximum group power for the first cabin equipment (54) and a second maximum group power for the second cabin equipment (40).

4. Aircraft cabin equipment control according to one of the preceding claims,
**characterized in that**
the two maximum group powers are defined as a function of one another.

5. Aircraft cabin equipment control according to one of the preceding claims,
**characterized in that**
the power distribution key has a first key (64), which is associated with the first cabin equipment (54), and a second key (66), which is associated with the second cabin equipment (40), wherein the configuration manager (4, 24, 44) is provided in order to release the first key (64) for free programming, and to block the second key (66).

6. Aircraft cabin equipment control according to the preceding claim,
**characterized in that**
the power distribution key has a third key (68) which is associated with different flight phases of an aircraft, and can be blocked in the event of free programmability of the first and/or second key (64, 66).

7. Aircraft cabin equipment control according to one of the preceding claims,
**characterized in that**
the configuration manager (14, 24, 44) is provided to define the upper limit of the available power variably below the maximum power, in accordance with predetermined rules.

8. Aircraft cabin equipment control according to the preceding claim,
**characterized in that**
the upper limit is defined as a function of the flight phase.

9. Aircraft cabin equipment control according to one of Claims 5 to 8,
**characterized in that**
the configuration manager (14, 24, 44) is also provided in order to process environmental data in conjunction with the fault routine (18), and to execute commands which result from this processing, wherein the environmental data comprises data from the following group:
- data which characterizes the aircraft
- data which characterizes the instantaneous situation of the aircraft,
- data which characterizes the constellation of further cabin equipment (12a - 12d, 40, 54)
- data which characterizes the instantaneous situation of at least one further cabin equipment (12a - 12d, 40, 54).

10. Aircraft cabin equipment control according to one of the preceding claims,
**characterized in that**
first cabin equipment (54) is connected to a power distribution device (50), bypassing the firewall (56), via circuit breakers (52).

## Revendications

1. Commande d'appareil de cabine d'aéronef (2, 32),
- comprenant un matériel de commande qui inclut un dispositif de traitement de données (4, 20a - 20c) et plusieurs interfaces (6a - 6e, 22, 38) pour la liaison avec les appareils de cabine (12a - 12d, 40, 54) d'un aéronef,
- comprenant des programmes d'appareil (16a - 16d, 26) pour commander les appareils de cabine (12a - 12d, 40, 54),
- comprenant un gestionnaire de configuration (14, 24, 44) qui est préparé pour enregistrer et mémoriser les données d'appareil qui caractérisent à la fois l'étendue des appareils de cabine (12a - 12d, 40, 54) à commander et les appareils de cabine (12a - 12d, 40, 54) eux-mêmes et pour créer, sur la base des données d'appareils combinées avec les données qui caractérisent l'aéronef, des configurations qui servent de base pour la commande des appareils de cabine (12a - 12d, 40, 54),
- comprenant deux réseaux de transmission de données (60, 34) dont un réseau de transmission de données ouvert (60) est relié avec les premiers appareils de cabine (54) ne concernant pas la sécurité et un deuxième réseau de transmission de données fermé (34), séparé du réseau de transmission de données ouvert (60) par un pare-feu (56) avec interface de sécurité (58), est relié avec les deuxième appareils de cabine (40) qui concernent la sécurité de la cabine, et
- comprenant un dispositif de régulation de la puissance (48) pour distribuer la puissance électrique aux appareils de cabine (12a - 12d, 40, 54), ce pour quoi
- le gestionnaire de configuration (14, 24, 44), d'après les indications des données d'appareil et d'une puissance maximale à mettre à la disposition des appareils de cabine (12a - 12d, 40, 54) prédéfinie, délivre au dispositif de régulation de la puissance (48) une clé de distribution de la puissance, laquelle fait la distinction entre les premiers appareils de cabine (54) ne concernant pas la sécurité et les deuxième appareils de cabine (40) qui concernent la sécurité et, d'après les indications de celle-ci, le dispositif de régulation de la puissance (48) distribue la puissance électrique aux appareils de cabine (12a - 12d, 40, 54) par le biais d'un commutateur de puissance (52) et ne fournit qu'une puissance limitée aux appareils de cabine (54) ne concernant pas la sécurité lorsque la puissance exigée par les appareils de cabine (12a - 12d, 40, 54) dépasse une valeur de seuil,
l'aéronef étant **caractérisé par** la puissance maximale qui doit être mise à la disposition des appareils de cabine (12a - 12d, 40, 54).

2. Commande d'appareil de cabine d'aéronef selon la revendication 1, **caractérisée en ce que** la clé de distribution de la puissance englobe au moins 75 % des premiers appareils de cabine (54) reliés avec le réseau de transmission de données ouvert (60) et le dispositif de régulation de la puissance (48) surveille la consommation de puissance des appareils de cabine (12a - 12d, 40, 54) et libère la puissance exigée par les appareils de cabine (12a - 12d, 40, 54) jusqu'à une valeur de seuil.

3. Commande d'appareil de cabine d'aéronef selon l'une des revendications précédentes, **caractérisée en ce que** le dispositif de régulation de la puissance (48) est préparé pour définir une première puissance de groupe maximale pour les premiers appareils de cabine (54) et une deuxième puissance de groupe maximale pour les deuxièmes appareils de cabine (40).

4. Commande d'appareil de cabine d'aéronef selon la revendication précédente, **caractérisée en ce que** les deux puissances de groupe maximales sont définies l'une en fonction de l'autre.

5. Commande d'appareil de cabine d'aéronef selon l'une des revendications précédentes, **caractérisée en ce que** la clé de distribution de la puissance présente une première clé (64) associée aux premiers appareils de cabine (54) et une deuxième clé (66) associée aux deuxièmes appareils de cabine (40), le gestionnaire de configuration (4, 24, 44) étant préparé pour libérer la première clé (64) en vue de sa programmation à volonté et pour bloquer la deuxième clé (66).

6. Commande d'appareil de cabine d'aéronef selon la revendication précédente, **caractérisée en ce que** la clé de distribution de la puissance présente une troisième clé (68) qui est associée aux différentes phase de vol d'un aéronef et qui peut être bloquée lorsque la première et/ou la deuxième clé (64, 66) est/sont programmable(s) à volonté.

7. Commande d'appareil de cabine d'aéronef selon l'une des revendications précédentes, **caractérisée en ce que** le gestionnaire de configuration (14, 24, 44) est préparé pour définir la limite supérieure de la puissance disponible de manière variable au-dessous de la puissance maximale en fonction de règles prédéfinies.

8. Commande d'appareil de cabine d'aéronef selon la revendication précédente, **caractérisée en ce que** la limite supérieure est définie en fonction de la phase de vol.

9. Commande d'appareil de cabine d'aéronef selon l'une des revendications 5 à 8, **caractérisée en ce que** le gestionnaire de configuration (14, 24, 44) est également préparé pour traiter les données d'environnement en relation avec la routine de défaut (18) et d'amener à exécution les instructions qui résultent de ce traitement, les données d'environnement étant des données du groupe suivant :
- les données qui caractérisent l'aéronef,
- les données qui caractérisent la situation momentanée de l'aéronef,
- les données qui caractérisent la constellation des autres appareils de cabine (12a - 12d, 40, 54),
- les données qui caractérisent la situation momentanée au moins d'un autre appareil de cabine (12a
- 12d, 40, 54).

10. Commande d'appareil de cabine d'aéronef selon l'une des revendications précédentes, **caractérisée en ce que** les premiers appareils de cabine (54) sont reliés avec un dispositif de distribution de la puissance (50) en contournant le pare-feu (56) par le biais d'un commutateur de puissance (52).
